# EUROPÄISCHE PATENTSCHRIFT

(11) **EP 1 582 774 B1**
(45) Veröffentlichungstag und Bekanntmachung des Hinweises auf die Patenterteilung: **18.07.2007**
(21) Anmeldenummer: 04008063.2
(22) Anmeldetag: 02.04.2004
(51) Int. Cl.: F16H 57/02, H02K 7/116

(54) **Getriebesystem**
Transmission system
Sytème de transmissions

(43) Veröffentlichungstag der Anmeldung: 05.10.2005
(73) Patentinhaber: Getriebebau Nord GmbH & Co. KG, 22941 Bargteheide (DE)
(72) Erfinder: Bouché, Bernhard, 22941 Bargteheide (DE)
(74) Vertreter: Glawe, Delfs, Moll

(56) Entgegenhaltungen:
- EP-A- 0 069 215
- CH-A- 597 532
- US-A- 4 111 069
- US-A- 5 758 542
- TORELLI C: "UNIVERSELL EINSETZBARE GETRIEBE MIT MONOBLOCK-GEHAUSE" ANTRIEBSTECHNIK, KRAUSSKOPF VERLAG FUR WIRTSCHAFT GMBH. MAINZ, DE, Bd. 31, Nr. 8, 1. August 1992 (1992-08-01), Seiten 50,53-54,56, XP000298656 ISSN: 0722-8546

## Beschreibung

Als Getriebemotoren sind Kombinationen eines Elektromotors mit einem Getriebe bekannt, bei denen der Motor am Getriebegehäuse angeflanscht ist (EP-A-69 215). Wenn der Wellenzapfen des Motors die Stirnradverzahnung der ersten Getriebestufe trägt, ergibt sich eine sehr wirtschaftliche Lösung, weil die separate Lagerung der eintreibenden Welle und eine Verbindung zwischen dieser Welle und der Motorwelle entfällt. Da der Motor jedoch eine Sonderanfertigung mit Ritzelwelle und Ölabdichtung ist, ist seine Beschaffung nicht so problemlos wie die eines Normmotors. In manchen Fällen zieht man aus diesem Grund die Verwendung eines Normmotors vor. Das ist ein Elektromotor, dessen Welle in einem Wellenstumpf endet, der mit einer Kupplung oder dergleichen verbindbar ist. Für seine Verbindung mit dem Getriebe ist ein Adapter erforderlich. Der Adapter enthält eine eigene Lagerung der eintreibenden Welle, die die Ritzelverzahnung der ersten Getriebestufe trägt, und ist über eine Wellenkupplung mit dem Wellenstumpf des Motors verbunden. Ein Nachteil dieser Ausführung ist das deutlich erhöhte Bauvolumen mit entsprechend höheren Kosten, zumal die wegen der kompakten Bauweise eng zusammen liegenden Lager der Adapterwelle hoch belastet sind und entsprechende Reibungsverluste verursachen.

Diesen Nachteil vermeidet eine weitere bekannte Ausführung (US-A-4111069), bei welcher der Adapter lediglich ein Lager enthält und ein zweites Lager für die Adapterwelle jenseits des Ritzels innerhalb des Getriebegehäuses in einer besonderen Lagerbohrung vorgesehen ist. Jedoch hat dies den Nachteil, daß ein besonderes Gehäuse für diejenigen Fälle vorgehalten werden muß, in denen statt des Antriebs über einen Adapter ein Ritzelmotor verwendet werden soll. Wie dieser Nachteil vermieden werden könnte, zeigt auch ein weiterer bekannter Vorschlag nicht (US-A-5758542), der einerseits die direkte Anflanschung eines Motors ohne Deckel oder Adapter an ein Getriebegehäuse zeigt, in welchem die Ritzelwelle vollständig gelagert ist, und der andererseits eine Ausführung zeigt, in welcher der Deckel des mit einer fliegenden Ritzelwelle ausgerüsteten Motors gleichzeitig als Getriebedeckel ausgeführt ist.

Der Erfindung liegt die Aufgabe zugrunde, ein Getriebesystem zu schaffen, das diese Nachteile nicht aufweist.

Die erfindungsgemäße Lösung liegt in den Merkmalen des Anspruchs. Dieser geht aus von der Ausführung gemäß US-A-4111069, bei welcher das Getriebegehäuse mit dem Motor über einen Adapter verbunden ist, der ein Lager für eine Adapterwelle enthält, die einerseits zur Verbindung mit dem Wellenstumpf des Motors ausgebildet ist und andererseits ein in das Getriebegehäuse ragendes Antriebsritzel bildet. Jenseits des Ritzels ist ein zweites Lager für die Adapterwelle vorgesehen, für das das Getriebegehäuse eine besondere Lagerbohrung enthält. Erfindungsgemäß kann dasselbe Getriebegehäuse einschließlich der dann nicht benutzten Lagerbohrung verwendet werden, wenn es an einem Motor montiert wird, dessen Welle ein fliegend gelagertes Ritzel trägt. Zwischen Getriebegehäuse und Motor wird in diesem Falle ein lagerloser Deckel eingeschaltet.

Es ist nicht erforderlich, für Getriebe mit zweiseitig gelagerter Ritzelwelle und solche mit fliegend am Motor gelagerten Ritzel unterschiedliche Gehäuse vorzusehen. Vielmehr verwendet man auch im letzteren Fall ein Gehäuse mit einer Lagerbohrung für eine Ritzelwelle, obwohl sie nicht gebraucht wird. Es kann nämlich logistisch günstiger sein, einen Gehäusetyp durchweg mit einer Lagerbohrung für die Ritzelwelle zu versehen, auch für diejenigen Fälle, in denen sie nicht verwendet wird, als unterschiedliche Gehäuse für unterschiedliche Anwendungsfälle bereitzuhalten.

Das Adaptergehäuse kann einstückig mit einem die Antriebsseite des Getriebegehäuses abdeckenden Deckel ausgeführt werden. Für diejenigen Fälle, in denen kein Motor mit Wellenstumpf, sondern ein Motor mit Ritzelwelle verwendet werden soll, ist ein die Antriebsseite des Getriebegehäuses abdeckender Deckel verfügbar, der zum paßgerechten Anschluß eines solchen Ritzelmotors ausgebildet ist.

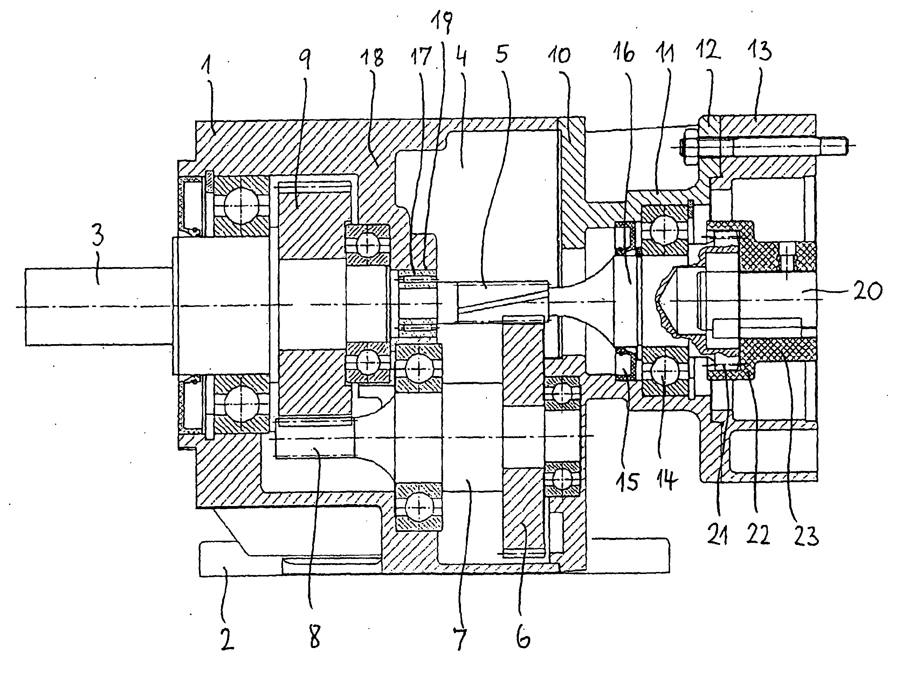

Die Erfindung wird im folgenden näher unter Bezugnahme auf die Zeichnung erläutert, die ein vorteilhaftes Ausführungsbeispiel veranschaulicht. Die einzige Figur zeigt einen Längsschnitt durch das Getriebe und den Adapter.

Das Getriebe mit Gehäuse 1, Fuß 2 und Abtriebswelle 3 bildet antriebsseitig einen Raum 4, der zumindest eine Getriebestufe enthält, die aus einem Ritzel 5 und einem Stirnrad 6 auf einer Welle 7 besteht, die ihrerseits ein Ritzel 8 trägt, das mit dem Abtriebsstirnrad 9 kämmt.

Der Getrieberaum 4 ist durch einen Getriebedeckel 10 geschlossen, der mit einem Adaptergehäuse 11 verbunden ist. Die Verbindung kann einstückig sein, wie es in der Zeichnung dargestellt ist. Das Adaptergehäuse kann aber auch an den Deckel angeflanscht sein, wobei zweckmäßigerweise die Anschlußmaße des Adapters mit denen eines Motors übereinstimmen, so daß derselbe Deckel für den Anschluß beider Alternativen verwendet werden kann.

Das Adaptergehäuse 11 ist in irgendeiner bekannten Weise mit Flansch 12 und Zwischenstück 13 zur starren Verbindung mit dem Gehäuse eines Normmotors ausgebildet. Das Adaptergehäuse 11 enthält ein Lager 14 sowie Dichtungen 15 für eine Adapterwelle 16, die das Antriebsritzel 5 trägt und jenseits dieses Ritzels durch ein Lager 17 in einer Zwischenwand 18 des Getriebegehäuses gelagert ist, das dafür eine Lagerbohrung 19 enthält.

Am anderen Ende ist die Adapterwelle 16 mit irgendeiner geeigneten Kupplung zur Verbindung mit dem Wellenstumpf 20 eines Normmotors versehen. Das dargestellte Beispiel zeigt zu diesem Zweck am Ende der Adapterwelle eine Kupplungsverzahnung 21, die mit der entsprechenden Zahnung einer Kupplung 22 zusammenwirkt, deren Hülse 23 unmittelbar mit dem Wellenstumpf 20 eines Motors verbindbar ist.

Da das Adaptergehäuse 11 lediglich eine Lagerung für die Adapterwelle 16 aufzunehmen braucht, während das andere Lager 17 im Getriebegehäuse angeordnet ist, ist die Baulänge des Adapters gering und sind die Lagerungs- und Reibungsverhältnisse günstig.

Wenn das Getriebegehäuse 1 mit einem direkt anzubauenden Motor mit Ritzelwelle benutzt wird, wird die Lagerbohrung 19 nicht benötigt. Dennoch wird dasselbe Gehäuse verwendet, um die Notwendigkeit zu vermeiden, eine zweite Gehäuseversion vorrätig zu halten.

## Patentansprüche

1. Getriebesystem mit einem Getriebe, das für den Anschluß eines Motors mit Wellenstumpf (20) mit einem Adapter versehen ist, dessen Adaptergehäuse (11) zur paßgerechten Verbindung mit dem Getriebegehäuse (1) und dem Motorgehäuse ausgebildet ist und ein Lager (14) für eine Adapterwelle (16) enthält, die einerseits zur Verbindung mit dem Wellenstumpf (20) des Motors ausgebildet ist und andererseits ein in das Getriebegehäuse (1) ragendes Antriebsritzel (5) bildet, wobei für die Adapterwelle (16) jenseits des Ritzels (5) ein zweites Lager (17) mit einer Lagerbohrung (19) im Getriebegehäuse (1) vorgesehen ist, **dadurch gekennzeichnet daß** für den Anschluß eines Motors mit fliegend gelagertem Ritzel statt des Adapters ein zur paßgerechten Verbindung mit dem Getriebegehäuse (1) und dem Motorgehäuse ausgebildeter, lagerloser Deckel und dasselbe Getriebegehäuse (1) einschließlich aber ohne Benutzung der Lagerbohrung (19) vorgesehen sind.

## Claims

1. A transmission system with a transmission which for the connection of a motor with a stub shaft (20) is provided with an adapter, the adapter housing (11) of which is designed for the accurately fitting connection with the transmission housing (1) and the motor housing, and comprises a bearing (14) for an adapter shaft (16) which, on the one hand, is designed for connection with the stub shaft (20) of the motor and, on the other hand, forms a drive pinion (5) projecting into the transmission housing (1), wherein on the other side of the pinion (5) a second bearing (17) is provided for the adapter shaft (16) with a bearing bore (19) in the transmission housing (1), **characterised in that** for the connection of a motor with a pinion mounted overhung, instead of the adapter, there are provided a cover without a bearing, which is designed for accurately fitting connection to the transmission housing (1) and to the motor housing, and said transmission housing (1) including but not using the bearing bore (19).

## Revendications

1. Système de transmission comportant une transmission, équipée d'adaptateurs pour la liaison d'un moteur avec un bout d'arbre (20), dont le boîtier d'adaptateur (11) est constitué pour une liaison ajustée avec le boîtier (1) de la transmission et le moteur et comporte en palier (14) pour un arbre d'adaptateur (16), qui d'une part est conformé pour être relié au bout d'arbre (20) du moteur et, d'autre part, forme un pignon d'entraînement (5) pénétrant dans le boîtier (1) de la transmission, un deuxième palier (17) pour l'arbre d'adaptateur (16) étant prévu au delà du pignon (5) ainsi qu'un perçage (19) de palier dans le boîtier (1) de la transmission, **caractérisé en ce que** pour la liaison d'un moteur avec des pignons montés fous, sont prévus, au lieu de l'adaptateur, un couvercle sans palier, conformé pour une liaison ajustée avec le boîtier (1) de la transmission et le boîtier du moteur, ainsi que ce même boîtier de transmission (1), y compris mais sans l'utiliser le perçage de palier (19).
